# EUROPEAN PATENT SPECIFICATION

(11) **EP 3 002 575 B1**
(45) Date of publication and mention of the grant of the patent: **22.05.2019**
(21) Application number: 15187648.9
(22) Date of filing: 30.09.2015
(51) Int. Cl.: G01M 1/02

(54) **A SHOCK-ABSORBING PLATFORM FOR A PORTION OF A BALANCING MACHINE**
DÄMPFENDE PLATTFORM FÜR EINEN TEIL EINER AUSWUCHTMASCHINE
UNE PLATFORME AMORTISSEUR POUR UNE PARTIE D'UNE MACHINE D'ÉQUILIBRAGE

(30) Priority: 03.10.2014 IT MI20141727
(43) Date of publication of application: 06.04.2016
(73) Proprietor: Balance Systems S.r.L., 20145 Milano (IT)
(72) Inventor: TRIONFETTI, Gianni, I - 20041 AGRATE BRIANZA (Monza Brianza) (IT)
(74) Representative: Lunati & Mazzoni S.r.L.

(56) References cited:
- DE-C- 976 179
- GB-A- 345 264
- US-A- 3 136 162

## Description

The present invention relates to a shock-absorbing platform for a portion of a balancing machine. Similar platforms are described in patent documents: DE-C-976179, GB-A-345264 and US-A-3136162.

Precision balancing machines are currently known.

They are servo-controlled by tools, or other rotating parts, and are suitable to perform the balancing thereof. Balancing is understood to mean the positioning of the centre of the mass of the piece in rotation on the axis of rotation. A balanced device does not create, in fact, unwanted vibration due to centrifugal forces.

The vibrations themselves are used to identify imbalances. In fact, balancing machines use precision sensors such as accelerometers and similar, to identify precisely the presence of vibrations due to imbalances of the rotating piece. Other devices, also part of the balancing machines, then correct said imbalances by means for example of mobile masses which can be misaligned, the addition or removal of material, and other means still.

Balancing machines, in particular a portion thereof, i.e. the portion measuring imbalances must consequently be isolated from the ground to avoid exchanging vibrations coming from the ground itself with vibrations due to internal imbalances of the machines. Said vibrations coming from the ground are due for example to the presence of vehicles in motion and the like.

In order to isolate the balancing machines from ground vibrations, they are placed on shock-absorbing platforms. These platforms are substantially composed of a structure connected to the ground, an upper support and elastomeric shock-absorbing elements which connect the structure and the platform.

Said elastomeric shock-absorbing elements thus mechanically isolate the upper support, on which the balancing machine is supported, from the ground.

The prior art described has several significant drawbacks.

In particular, the shock-absorption provided is insufficient and/or should be better.

To obviate said drawback larger shock absorbers of different materials and many types of counterweights attached to the upper platform have been used. However the isolation has been improved by only a small if not negligible amount.

Moreover, said drawback is particularly difficult to detect. The user or manufacturer of balancing machines and/or shock-absorbing platform notes, in fact, merely suboptimal balancing without knowing the cause thereof.

In this situation the technical purpose of the present invention is to devise a shock-absorbing platform for a portion of a balancing machine able to substantially overcome the drawbacks mentioned.

Within the sphere of said technical purpose one important aim of the invention is to obtain a shock-absorbing platform which is able to optimally isolate the balancing machine from environmental vibrations and in particular ground vibrations.

Another important aim of the invention is to make a simple and inexpensive shock-absorbing platform.

The technical purpose and specified aims are achieved by a shock-absorbing platform for a portion of a balancing machine as claimed in the appended Claim 1.

Preferred embodiments are described in the dependent claims.

The characteristics and advantages of the invention are clearly evident from the following detailed description of preferred embodiments thereof, with reference to the appended drawings wherein:

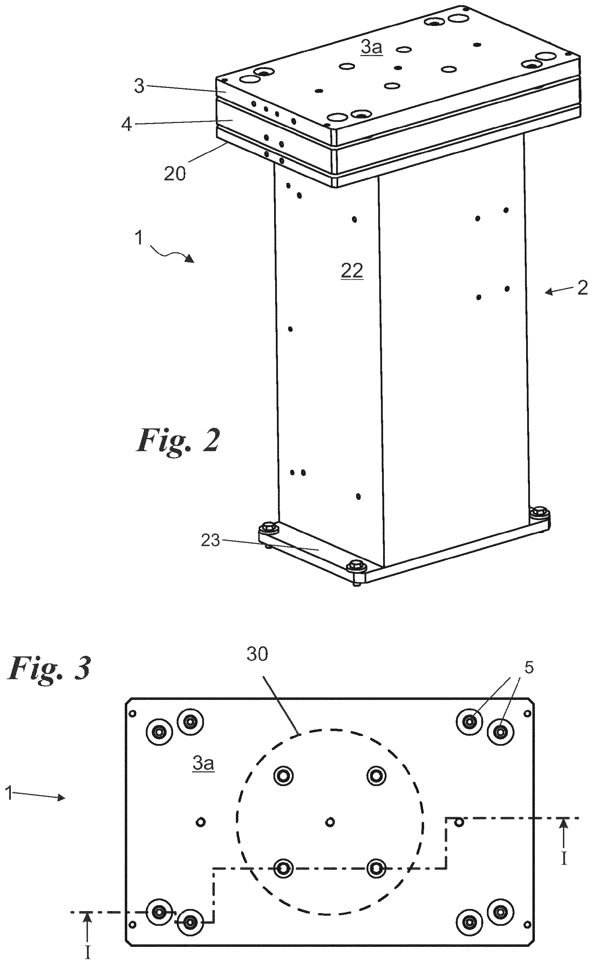

**Fig. 1** shows a cross-section I-I, shown in Fig. 3, of the shock-absorbing platform according to the invention;
**Fig. 2** shows an axonometric view of the shock-absorbing platform according to the invention;
**Fig. 3** is a view from above of the shock-absorbing platform according to the invention; and
**Fig. 4** is an axonometric view of the shock-absorbing platform supporting a portion of a balancing machine.

With reference to the Drawings, reference numeral **1** globally denotes the shock-absorbing platform according to the invention.

It is suitable to support in particular a machine tool and more specifically a portion of a balancing machine **100,** in detail the imbalances measurement portion of said balancing machine. The portion of a balancing machine 100 is not part of the platform but is supported by it and, in particular, is integrally connected thereto by releasable connection means such as screws and the like.

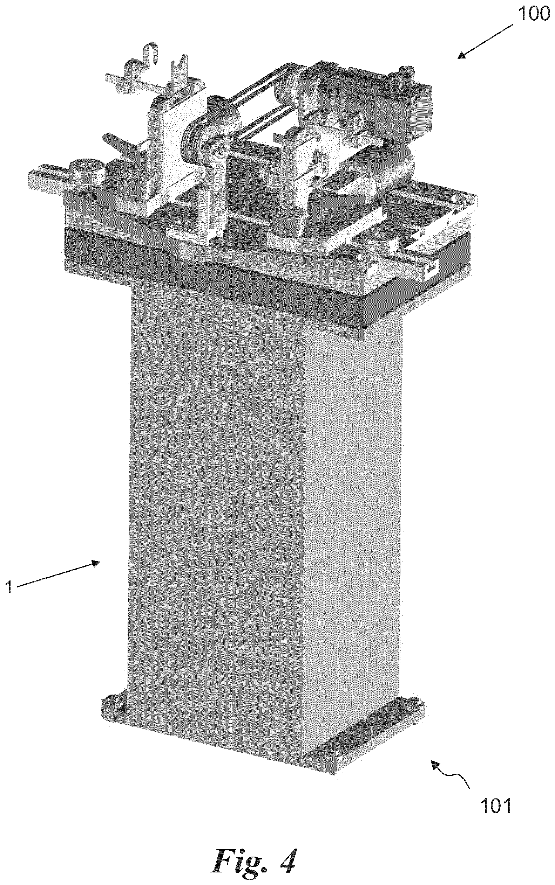

The portion of a balancing machine 100 and the shock-absorbing platform 1 which supports it together form a balancing system **101,** shown in Fig. 4.

The shock-absorbing platform 1 comprises, in brief: a base **2,** connectable to the ground **S,** a working plate **3,** suitable to support the balancing machine 100 and defining a working surface **3a,** preferably rectangular, at least one rigid intermediate structure **4** interposed between the base 2 and the working plate 3, and a plurality of shock-absorbing elements **5** connecting the intermediate structure 4 to the base 2 and to the working plate 3.

More in detail, the base 2 is attachable to the ground by releasable constraint means such as screws and the like. It thus comprises a base **23** preferably plate-shaped.

The base 2 then comprises a supporting plate 20 the normal projection of which, along the working surface 3a, has substantially the same lateral perimeter as the working plate 3 as shown in the appended drawings.

The base 2 further comprises a frame **22,** preferably rectangular and hollow, which integrally connects the base 21 to the support plate 20.

The supporting plate 20 preferably also comprises a central through hole **22a.** The hollow central portion of the frame 22 and the central through hole 22a of the supporting plate 20 thus form a central cavity **21** of the base 2. The base 2 is preferably made of steel.

The working plate 3, also preferably made of steel, defines the working surface **3a** which is appropriately the uppermost part of the platform 1 in use.

The working plate 3 is preferably substantially rectangular and has side dimensions, respectively long and short, preferably comprised between 2 dm and 1 m, more preferably between 3 dm and 5 dm, and between 1 dm and 5 dm, and more preferably between 2 dm and 3 dm. It is suitable to allow the constraint of tools or other tool-holder plates thereon. Said plate 3 is thus provided with threaded holes and/or various attachments.

The intermediate structure 4 preferably comprises a single rigid intermediate plate **40** the normal projection of which along the working surface 3a, has essentially the same side perimeter as the working plate 3 and therefore also of the supporting plate 20. It has, in addition, preferably, a through central cavity **41** similar to the central through hole 22a of the supporting plate 20.

The intermediate structure 4 is preferably made of steel and has a mass between 15 and 25 kg.

The intermediate structure 4 is connected to both the working plate 3, and to the base 2 and in particular to the supporting plate 20, by means of said shock-absorbing elements 5. The shock-absorbing elements 5 are preferably cylinders of elastomeric material. They are preferably packed between laminar metal bases and preferably have a diameter between 5 mm and 5 cm, more preferably between 1 cm and 3 cm and a height of between 2 mm and 2 cm and more preferably between 5 mm and 1.5 cm. They are preferably moreover hollow and crossed by releasable connection means, such as screws or similar, to connect the intermediate structure 4 to the base 2 and/or to the working plate 3. Said through hole preferably has a diameter between 4 mm and 1 cm. The shock-absorbing elements 5 are thus arranged on two different horizontal planes, one for connecting the intermediate structure 4 to the base 2 and one for the connection of the intermediate structure 4 to the working plate 3. Each plane comprises four shock-absorbing elements 5 arranged near the lateral edges of the structure 4.

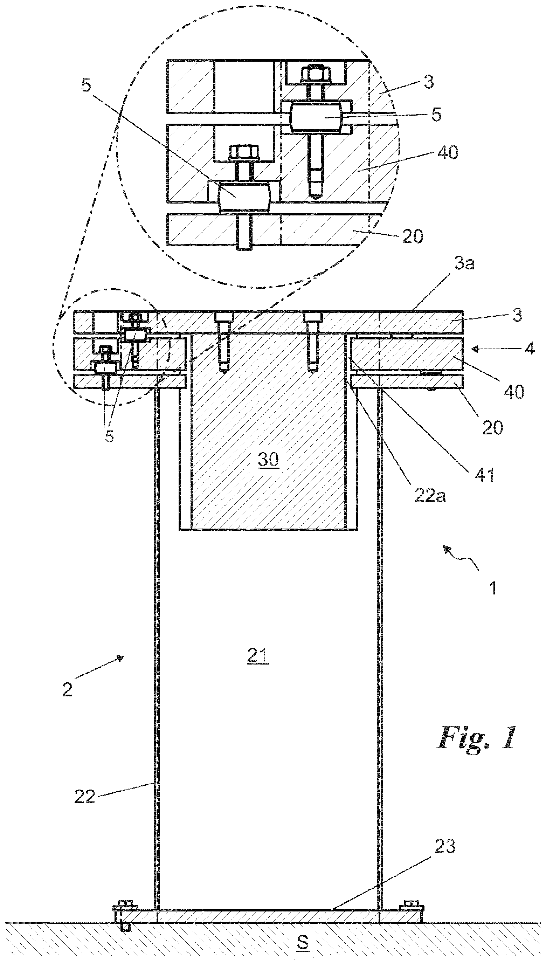

The shock-absorbing platform 1 lastly comprises a counterweight **30** directly integrally constrained to the working plate 3, attached for example by means of screws or similar. The counterweight 30 is suitably inserted inside the central cavity 21 and the through central cavity 41, as shown in Fig. 1. It preferably has a mass between 20 kg and 60 kg, more preferably between 30 kg and 50 kg, and more preferably still between 35 kg and 45 kg. The counterweight 30 thus has a preferably cylindrical shape or similar.

The use of the shock-absorbing platform 1 or balancing system 101 described above in structural terms is substantially identical to the functioning of the known platforms.

The shock-absorbing platform 1 according to the invention achieves unexpected and important advantages.

In fact, to measure the accuracy of the imbalance measurements of balancing machines, two different series of measurements of vibrations along the X and Y axes are usually made. The reciprocal deviations of the two series of measurements are then measured and the mean weight of the errors and percentage influence on the total measurement is lastly calculated.

Particular series of measurements were then made with and without the shock-absorbing platform according to the invention. In said measurements, the average percentage deviation of the measurements with a balancing machine placed on a traditional shock-absorbing platform was about 12.3%, while the average percentage deviation of the measurements with a balancing machine placed on a shock-absorbing platform 1 according to the invention was 1-352% thus approximately ten times lower. It is to be emphasised that a good average deviation is considered an average deviation of below 12%.

The shock-absorbing platform 1 is also simple and inexpensive.

Variations may be made to the invention without departing from the scope of the inventive concept defined in the claims.

For example, an intermediate structure composed of two or more intermediate plates 40, mutually connected by shock-absorbing elements 5, or the like may be provided for.

In said sphere all the details may be replaced with equivalent elements and the materials, shapes and dimensions may be as desired.

## Claims

1. A shock-absorbing platform (1) for a portion of a balancing machine (100), said shock-absorbing platform (1) comprising: a base (2), suitable to be constrained to the ground (S), a working plate (3) suitable to support said balancing machine (100) on a working surface (3a), a rigid intermediate structure (4) arranged between said base (2) and said working plate (3), a plurality of shock-absorbing elements (5) linking said intermediate structure (4) to said base (2) and said working plate (3),
and **characterised in that** said shock-absorbing elements (5):
- are arranged on two different horizontal planes, one for connecting said intermediate structure (4) to said base (2) and one for the connection of said intermediate structure (4) to said working plate (3), each plane comprising four of said shock-absorbing elements (5) arranged near the lateral edges of said intermediate structure (4),
- said shock-absorbing elements (5) being not coaxial.

2. The shock-absorbing platform (1) as claimed in claim 1, wherein said base (2) comprises a supporting plate (20) the normal projection of which, along said working surface (3a), has substantially the same lateral perimeter as said working plate (3).

3. The shock-absorbing platform (1) as claimed in claim 1 or 2, wherein said base (2) comprises a central cavity (21).

4. The shock-absorbing platform (1) as claimed in one or more of the preceding claims, wherein said intermediate structure (4) comprises a rigid intermediate plate (40) the normal projection of which, along said working surface (3a), has substantially the same lateral perimeter as said working plate (3).

5. The shock-absorbing platform (1) as claimed in the preceding claim, wherein said intermediate structure (4) comprises a central through cavity (41).

6. The shock-absorbing platform (1) as claimed in claims 3 and 5, comprising a counterweight (30) directly integrally constrained to said working plate (3).

7. The shock-absorbing platform (1) as claimed in the preceding claim, wherein said counterweight (30) is inserted inside said central cavity (21).

8. The shock-absorbing platform (1) as claimed in claim 6 or 7, wherein said counterweight (30) has a mass that is comprised between 20 kg and 60 kg.

9. The shock-absorbing platform (1) as claimed in one or more of the preceding claims, wherein said shock-absorbing elements (5) are cylinders made of an elastomeric material.

10. A balancing system comprising a shock-absorbing platform (1) as claimed in one or more of the preceding claims and a portion of a balancing machine (100), constrained to said working plate (3).

## Patentansprüche

1. Dämpfende Plattform (1) für einen Teil einer Auswuchtmaschine (100), wobei die genannte dämpfende Plattform (1) Folgendes umfasst: einen am Boden (S) verankerbaren Sockel (2), eine Arbeitsplatte (3), die geeignet ist, die genannte Auswuchtmaschine (100) auf einer Arbeitsfläche (3a) zu tragen, einen steifen Zwischenaufbau (4) zwischen dem genannten Sockel (2) und der Arbeitsplatte (3), eine Vielzahl an dämpfenden Elementen (5), die den genannten Zwischenaufbau (4) mit dem genannten Sockel (2) und der genannten Arbeitsplatte (3) verbinden, und **dadurch gekennzeichnet ist, dass** die genannten dämpfenden Elemente (5):
- auf zwei verschiedenen horizontalen Ebenen angeordnet sind, eine zur Verbindung des genannten Zwischenaufbaus (4) mit dem genannten Sockel (2) und die andere zur Verbindung des genannten Zwischenaufbaus (4) mit der genannten Arbeitsplatte (3), wobei jede Ebene vier in der Nähe der seitlichen Kanten des genannten Zwischenaufbaus (4) angeordnete dämpfende Elemente (5) umfasst,
- wobei die dämpfenden Elemente (5) nicht koaxial sind.

2. Dämpfende Plattform (1) nach Anspruch 1, bei der der genannte Sockel (2) eine Stützplatte (20) umfasst, deren normale Projektion entlang der genannten Arbeitsfläche (3a) im Wesentlichen den gleichen Seitenumfang der genannten Arbeitsplatte (3) aufweist.

3. Dämpfende Plattform (1) nach Anspruch 1 oder 2, bei der der genannte Sockel (2) einen mittleren Hohlraum (21) umfasst.

4. Dämpfende Plattform (1) nach einem oder mehreren der vorangegangenen Ansprüche, bei der der genannte Zwischenaufbau (4) eine steife Zwischenplatte (40) umfasst, deren normale Projektion entlang der genannten Arbeitsfläche (3a) im Wesentlichen den gleichen Seitenumfang der genannten Arbeitsplatte (3) aufweist.

5. Dämpfende Plattform (1) nach dem vorangegangenen Anspruch, bei der der genannte Zwischenaufbau (4) einen durchgehenden mittleren Hohlraum (41) umfasst.

6. Dämpfende Plattform (1) nach den Ansprüchen 3 und 5, umfassend ein direkt fest mit der genannten Arbeitsplatte (3) verbundenes Gegengewicht (30).

7. Dämpfende Plattform (1) nach dem vorangegangenen Anspruch, bei der das genannte Gegengewicht (30) in das Innere des genannten mittleren Hohlraums (21) eingesetzt ist.

8. Dämpfende Plattform (1) nach Anspruch 6 oder 7, bei der das genannte Gegengewicht (30) ein Gewicht zwischen 20 kg und 60 kg aufweist.

9. Dämpfende Plattform (1) nach einem oder mehreren der vorangegangenen Ansprüche, bei der die genannten dämpfenden Elemente (5) kleine Zylinder aus Elastomerwerkstoff sind.

10. Auswuchtsystem umfassend eine dämpfende Plattform (1) nach einem oder mehreren der vorangegangenen Ansprüche und einen Teil der Auswuchtmaschine (100), der mit der genannten Arbeitsplatte (3) verbunden ist.

## Revendications

1. Plateforme amortisseur (1) pour une partie d'une machine d'équilibrage (100), ladite plateforme amortisseur (1) comprenant : une base (2) pouvant être fixée au sol (S), une plaque de travail (3) apte à soutenir ladite machine d'équilibrage (100) sur un plan de travail (3a), une structure intermédiaire (4) rigide et interposée entre ladite base (2) et ladite plaque de travail (3), une pluralité d'éléments amortisseurs (5) reliant ladite structure intermédiaire (4) à ladite base (2) et à ladite plaque de travail (3) **caractérisée en ce que** lesdits éléments amortisseurs (5) :
- sont disposés sur deux plans horizontaux différents, l'un pour relier ladite structure intermédiaire (4) à ladite base (2) et l'autre pour relier ladite structure intermédiaire (4) à ladite plaque de travail (3), chacun des plans comprenant quatre éléments amortisseurs (5) disposés à proximité des arêtes latérales de ladite structure intermédiaire (4),
- lesdits éléments amortisseurs (5) étant non coaxiaux.

2. Plateforme amortisseur (1) selon la revendication 1, dans laquelle ladite base (2) comprend une plaque de support (20) dont la projection normale, le long dudit plan de travail (3a) a essentiellement le même périmètre latéral de ladite plaque de travail (3).

3. Plateforme amortisseur (1) selon la revendication 1 ou 2, dans laquelle ladite base (2) comprend une cavité centrale (21).

4. Plateforme amortisseur (1) selon l'une ou plusieurs des revendications précédentes, dans laquelle ladite structure intermédiaire (4) comprend une plaque intermédiaire rigide (40) dont la projection normale, le long dudit plan de travail (3a) a essentiellement le même périmètre latéral de ladite plaque de travail (3).

5. Plateforme amortisseur (1) selon la revendication précédente, dans laquelle ladite structure intermédiaire (4) comprend une cavité centrale traversante (41).

6. Plateforme amortisseur (1) selon les revendications 3 et 5, comprenant un contrepoids (30) directement solidairement fixé à ladite plaque de travail (3).

7. Plateforme amortisseur (1) selon la revendication précédente, dans laquelle ledit contrepoids (30) est inséré à l'intérieur de ladite cavité centrale (21).

8. Plateforme amortisseur (1) selon la revendication 6 ou 7, dans laquelle ledit contrepoids (30) a une masse comprise entre 20 kg et 60 kg.

9. Plateforme amortisseur (1) selon l'une ou plusieurs des revendications précédentes, dans laquelle lesdits éléments amortisseurs (5) sont des cylindres en élastomère.

10. Système d'équilibrage comprenant une plateforme amortisseur (1) selon une ou plusieurs des revendications précédentes et une partie d'une machine d'équilibrage (100) assujettie à ladite plaque de travail (3).
